Europäisches Patentamt

(19) European Patent Office

Office européen des brevets

(11) Publication number: **0 076 151**
**A2**

## (12) EUROPEAN PATENT APPLICATION

(21) Application number: **82305122.2**

(22) Date of filing: **28.09.82**

(51) Int. Cl.³: **A 01 K 61/00**

(30) Priority: 28.09.81 JP 143860/81
16.03.82 JP 35785/82
08.07.82 JP 102426/82

(43) Date of publication of application:
06.04.83 Bulletin 83/14

(84) Designated Contracting States:
BE FR

(71) Applicant: BRIDGESTONE TIRE COMPANY LIMITED
10-1, Kyobashi 1-Chome Chuo-Ku
Tokyo(JP)

(72) Inventor: Saito, Masao
150-7, Kashio-Cho Totsuka-Ku
Yokohama City(JP)

(72) Inventor: Maekawa, Takashi
150-7, Kahio-Cho Totsuka-Ku
Yokohama City(JP)

(72) Inventor: Morimura, Shinji
279-4, Ohzo Samukawa-Cho
Kohza-Gun Kanagawa Pref.(JP)

(72) Inventor: Hirakawa, Masahiro
827, Kashio-Cho Totsuka-Ku
Yokohama City(JP)

(72) Inventor: Sasaki, Hiroshi
827, Kashio-Cho Totsuka-Ku
Yokohama City(JP)

(74) Representative: Whalley, Kevin et al,
Marks & Clerk 57/60 Lincoln's Inn Fields
London WC2A 3LS(GB)

(54) Fish breeding tank apparatus.

(57) An apparatus for a fish breeding tank which includes a frame (1), a netted body (2) held by the frame to form a space for receiving fish to be bred, and a plurality of air floats (A,B) attached to the tank and arranged to be supplied through air supply pipes (4, 5) with air for adjusting the buoyancy of the tank in water, the apparatus comprising control means (112) adapted to operate, when the fish breeding tank is tilted more than a predetermined angle, to decrease or increase buoyancy of the associated air float for restoring the fish breeding tank to its normal position.

FIG.3

## "FISH BREEDING TANK APPARATUS"

This invention relates to apparatus for a fish breeding tank having a plurality of air floats.

Fish breeding tanks adapted to sink or submerge into water and float or rise to the water surface have been effectively used in fish breeding or fish farming, since the fish breeding tank may be tugged while floating on the water surface to the desired water area or to a safety area for avoiding redwater, and because the fish breeding tank may be advantageously submerged to depths suitable for breeding various kinds of fish, and the tank may be floated or raised for feeding or collecting the fish. The term "fish breeding tank" used herein is intended to include tanks for attaching and breeding seaweed and shellfish.

Such a fish breeding tank includes weights for submerging it and air floats for easily raising it from the submerged position. The air floats are variable in volume for the purpose of adjusting their buoyancy. The air floats are connected by air supply pipes through floating members such as buoys to an air compressor on a working boat. The air floats are supplied with air so as to be inflated to increase the buoyancy which floats or raises the fish breeding tank against its weight in water, and are evacuated so as to be deflated to submerge or sink the tank into the water. In order to prevent the fish breeding tank from tilting during the floating and submerging operation, a plurality of intermediate underwater floats, separate from the air floats partially supporting the weight of the tank in the water, are arranged around the fish breeding tank and connected to a plurality of wires anchored to the water bed.

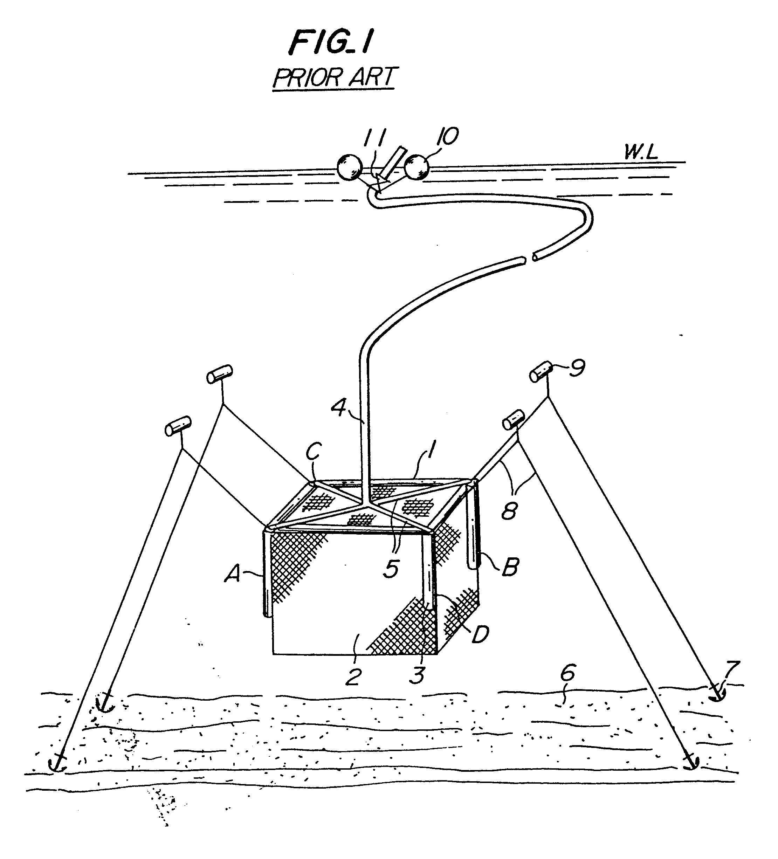

Figure 1 of the accompanying drawings is a perspective view which illustrates such a known fish breeding tank suspended in water, which comprises a frame 1, a netted body 2, cylindrical air float holders 3 which enclose therein respective air floats (not shown) and serve as weights, a main air pipe 4 communicating through branch pipes 5 with the air floats, anchors 7 fixed to the water bed 6, intermediate underwater floats 9, ropes or cables 8 connecting the fish breeding tank and anchors 7 to the intermediate underwater floats 9, buoys 10 and a stop valve 11. In use, a working boat approaches above the suspended fish breeding tank and an air compressor arranged on the working boat is then connected to one end of the main air pipe 4 extending above the water. By opening the stop valve 11 the floats in the holders 3 are filled with air under pressure to cause the fish breeding tank to rise or float up to the water surface into a position making it possible to feed the fish in the tank or to carry out other measures. Thereafter, the floats in the holders 3 are evacuated again to submerge the fish breeding tank into the water.

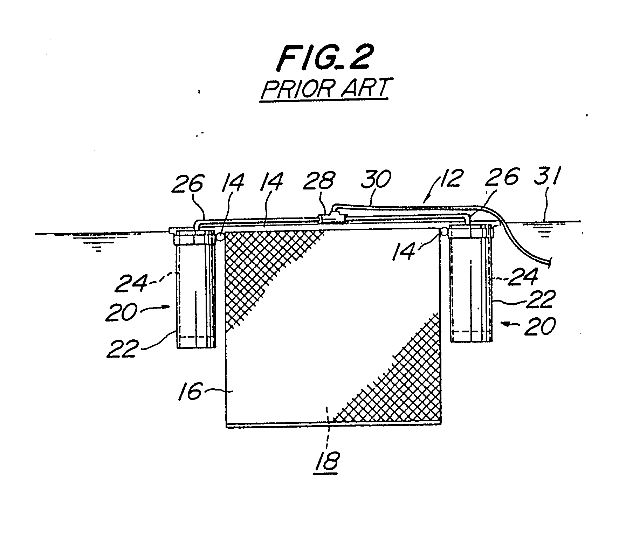

Figure 2 of the accompanying drawings is a side view which illustrates another known fish breeding tank 12 which is similar to the tank shown in Figure 1. The fish breeding tank 12 comprises four frame members 14 in the form of a square well crib or projected parallels, from which is suspended a fish breeding netted body 16 including at its upper end a top net and at its lower end a bottom net to surround a fish accommodating space 18.

At each corner of the square frame of the four frame members 14 or each connected end of the two adjacent frame members, an air filled body 20 is secured to the square frame for floating the fish breeding tank 12. Each air filled body 20 comprises a cylindrical cover 22 made of, for example, vinyl chloride and a flexible bag 24 housed in the cylindrical cover 22 and made for example of rubber and whose upper end is connected to a rubber hose 26.

The four rubber hoses 26 of the four air filled bodies 20 communicate through a joint 28 with a rubber hose 30. When air under pressure is fed through the rubber hose 30 into the flexible bags 24, they are inflated to provide buoyancy which causes the fish breeding tank 12 to float up to the water surface. If the air is exhausted from the flexible bags 24 through the rubber hose 30 to lose the buoyancy, the fish breeding tank 12 is submerged into the water.

As can be seen from Figure 1, since the respective air floats in the holders 3 communicate through the branch pipes 5 with the main air pipe 4, there is a risk of tilting of the fish breeding tank owing to an unbalanced buoyancy resulting from the fact that the respective air floats inflate or deflate non-uniformly or at an unequal rate due to existing or newly caused difference in air resistance between respective branch pipes. As a result, furthermore, there is difference in water level of the air floats, resulting in difference in external pressure acting upon the air floats which further tends to increase the tilting of the fish breeding tank. When an operator gets on the frame 1 of the tank, his weight causes an unbalanced load on the tank to increase its tilting which is dangerous for his working.

It seems that this problem can be solved by sufficiently increasing the inner volume of the air floats and hence the buoyancy. However, since the suspended position of the fish breeding tank in the water relies upon the balance between the weight of the tank in the water and the buoyancy of the air floats, it is difficult to use air floats having a great buoyancy in view of the required balance at a particular depth where the tank is located. Accordingly, increase in volume of the air floats is only allowed at the most to an extent for compensating for increase in weight of the tank due to adhering of underwater living things thereto for a long time. Moreover, unreasonable increase in volume of the air floats adversely affects the control of the position of the tank achieved by the intermediate underwater floats.

In the event of sudden and unpredictable rough weather, even if an operator wished to submerge a fish breeding tank to avoid damage thereto, even if too late, the operator could not approach to the tank or would be obliged to do so at the risk of danger. In the case of fish breeding tanks arranged remote from a seashore, it is impossible to take account of rapid changes in weather because the tanks cannot be rapidly submerged into water.

It is an object of the present invention to provide fish breeding tank apparatus, which advantageously eliminates or at least mitigates the above problems of the prior art.

It is another object of the present invention to provide fish breeding tank apparatus having a plurality of air floats, which, when the tank is tilted, selectively performs preferential air supply to the float at a lower level (when floating) and preferential air exhaust from the float at a higher level (when submerging) in order to easily restore the tank into the normal position, thereby maintaining the proper position of the tank floating on the water surface or upon rising or submerging.

Accordingly, the present invention provides apparatus for a fish breeding tank including a frame, a netted body held by the frame to form a space for receiving fish and the like to be bred, and a plurality of air floats attached to the tank and arranged to be supplied through air supply pipes with air for adjusting the buoyancy of the tank in water, wherein the apparatus comprises control means corresponding in number to the air floats and arranged in passages for supplying the air to the air floats, each control means comprising an air feeding branch passage for supplying air into the air float and an air exhausting branch passage for exhausting air from the air float, and valve means operable when the fish breeding tank is tilted more than a predetermined angle to close the air feeding or exhausting branch passage depending upon whether it is required to decrease or increase the buoyancy of the associated air float.

It is desirable for the fish breeding tank apparatus to be subject to remote control without approaching the tank.

For this purpose, the apparatus may suitably further comprise a three-way valve for selectively connecting the air floats with an air exhaust pipe, a valve provided in the air exhaust pipe, drive means for opening this valve, and a receiver for energizing the drive means upon receipt of a signal from a transmitter, whereby the fish breeding tank may be remotely controlled.

The invention will be further described by way of example only, with reference to the accompanying drawings, in which :

Figure 1 is a perspective view of a known fish breeding tank as mentioned above;

Figure 2 illustrates another known fish breeding tank as mentioned above;

Figure 3 is a schematic illustration of one embodiment of the apparatus according to the invention;

Figures 4a and 4b are schematic explanatory views for illustrating the operation of valves in the apparatus shown in Figure 3;

Figure 5 is a sectional plan view of another embodiment of the apparatus according to the invention;

Figure 6 is a sectional view taken along the line VI-VI in Figure 5, illustrating the operation of the apparatus;

Figure 7 is a sectional view taken along the line VII-VII in Figure 5, illustrating the operation of the apparatus;

Figures 8a and 8b are schematic explanatory views for illustrating the operation of the apparatus shown in Figure 5;

Figure 9 illustrates a fish breeding tank provided with a further embodiment of the apparatus according
to the invention which makes it possible to remotely control the tank;

Figure 10 is a front elevation illustrating the apparatus shown in Figure 9; and

Figure 11 is a plan view of the apparatus shown in
Figure 10.

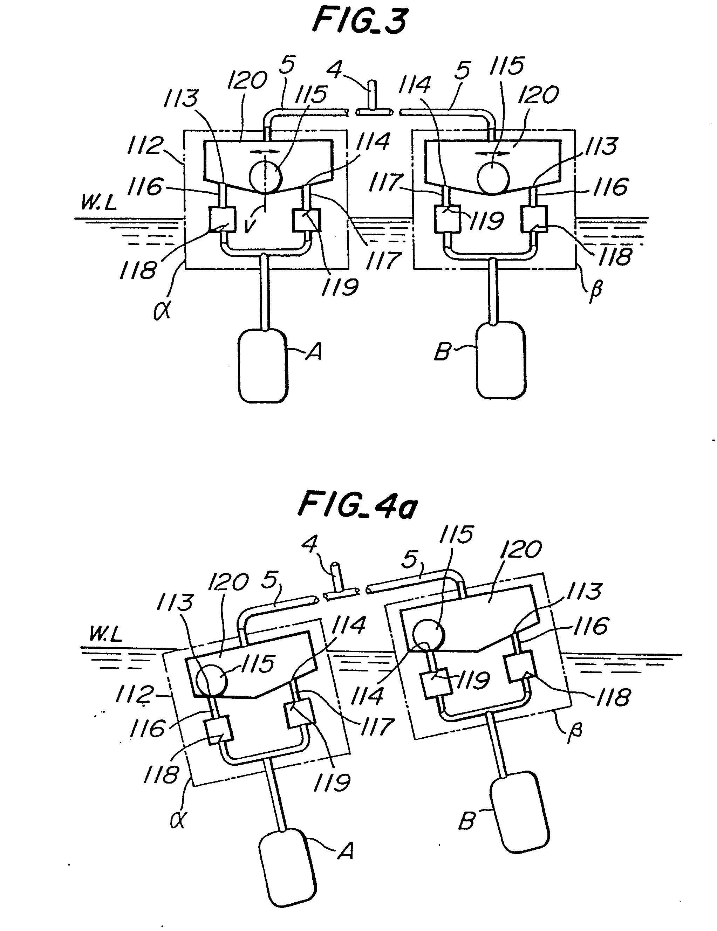

The apparatus shown in Figure 3, which may be
suitably applied to the fish breeding tank as shown in
Figures 1 and 2, comprises units α and β arranged
between branch pipes 5 and air floats A and B and/or
C and D diagonally opposed as shown in Figure 1. As
the constructions of the units α and β to be associated with the air floats A and B are essentially identical with each other, one of the units will be
explained referring to Figure 3.

The unit 112 comprises a pair of valve openings
113 and 114 arranged on both sides of a vertical line v
perpendicular to a reference water level WL, a rolling
valve 115 adapted to close the valve opening 113 or 114
when the vertical line v is tilted at an angle, for
example approximately 5°, and to open the valve opening
upon returning to its original vertical position, and a
pair of branch passages 116 and 117 for connecting
the valve openings 113 and 114 with the air float A or
B. The branch passages 116,117 are provided with
respective check valves 118 and 119 permitting air to
flow in directions opposite to each other. A valve
chamber 120 into which the valve openings 113,114 open
communicates with a branch pipe 5 for supplying the air
into the air float.

Referring to Figure 4a, while the air is being
supplied into the main air pipe 4 from a working boat in order to float or raise a fish breeding tank, if the frame of the fish breeding tank (not shown) is tilted for any reason in a counterclockwise direction as shown in Figure 4a, the rolling valves 115 close the valve opening 113 of the left side unit α and the valve opening 114 of the right side unit β, respectively. As a result, the check valve 119 in the left side unit α continues to supply the air under pressure to the air float A but the check valve 118 does not allow air to flow into the air float B, so that inflation of the float A is promoted to increase its buoyancy, so that the fish breeding tank is restored from its tilted position to its substantially horizontal position.

So long as the air supply through the branch pipes is continued, such a restoration of the tank from a tilted position to a horizontal position is effected in this manner, when an unbalanced load acts on the frame 1 of the fish breeding tank, even if it is caused by an operator who has just climbed on the fish breeding tank.

While the fish breeding tank is being submerged by exhausting the air in the air floats through the main air pipe 4, if the fish breeding tank is tilted in the counterclockwise direction as shown in Figure 4a, the air from the float B freely flows through the check valve 118 in the unit β, but the check valve 119 does not permit the air from the float A to flow, so that submergence is promoted on the side of the unit β to cause similar restoration of the fish breeding tank.

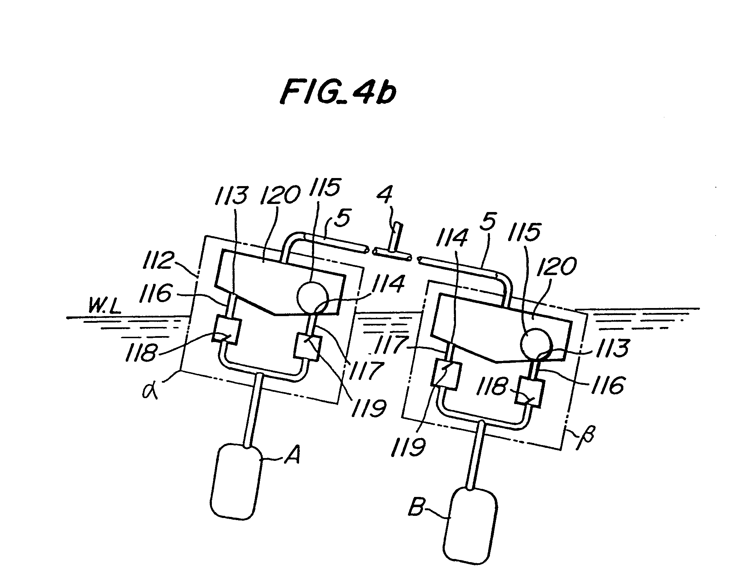

In other words, as soon as a water level difference ΔL between the air floats A and B reaches a predetermined value, the controlled flowing of supplied air or exhausted air in any direction to decrease the tilting of the fish breeding tank performs the control for restoring unexpected tilting of the tank during the floating or submerging operation and in floating position on the water surface. Figure 4b shows positions of the rolling valves in the units when the fish breeding tank is tilted in a clockwise direction. The restoration of the fish breeding tank from the tilted position to the normal horizontal position is effected in the same manner as for the counterclockwise tilting.

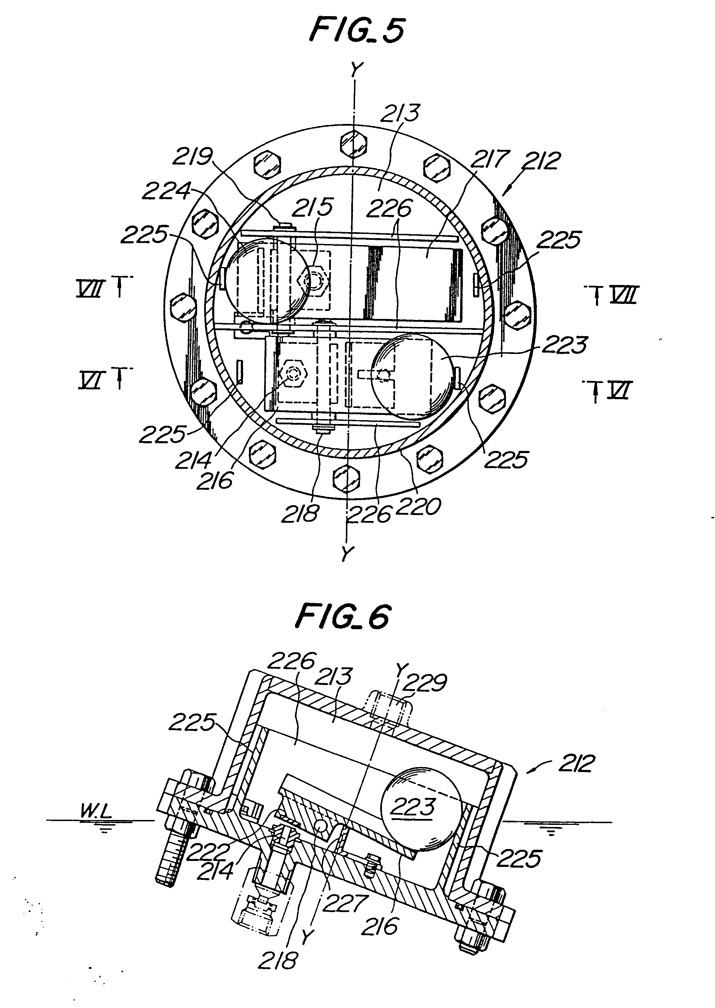

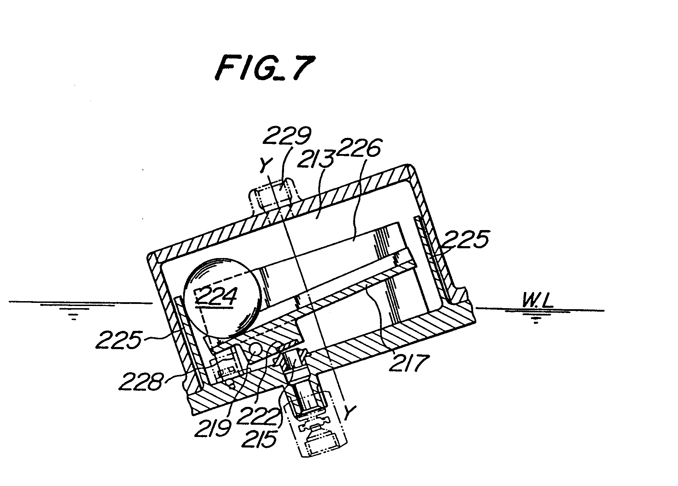

Figure 5 shows a further preferred embodiment of a control valve 212 for closing and opening valve openings in the units, whose operating positions are shown in Figures 6 and 7.

The control valve 212 includes a valve chamber 213 comprising therein a pair of valve openings, an air supply port 214 and an air exhaust port 215 which are located on one side of a vertical surface Y-Y dividing the valve chamber 212 into two equal parts and perpendicular to the reference water surface W L and are spaced apart in the direction of the vertical surface Y-Y.

Above the air supply and exhaust ports 214 and 215 are arranged respective rocking plates 216 and 217 which extend substantially perpendicularly to the vertical surface Y-Y and are pivotally supported in a valve body 220 by respective shafts 218 and 219 spaced apart from the valve openings 214 and 215. The rocking plates 216 and 217 are provided with respective elastic seal members 221 and 222 at locations of the plates in opposition to the supply port 214 and exhaust port 215 such that the valve openings are tightly closed by the abutment of the elastic seal members against the ports and opened by raising the seal members away from the ports.

In addition, balls 223 and 224 are arranged on the respective rocking plates 216 and 217 so as to roll in longitudinal directions of the plates, thereby causing rocking movements of the plates 216 and 217 caused by the rolling movements of the balls 223 and 224.

Stops 225 and 226 extending from the valve body 220 are provided to limit any excess rolling movements of the balls in longitudinal and transverse directions of the rocking plates, thereby preventing the balls from coming off the rocking plates 216 and 217. Limit stops 227 and 228 for the rocking plates 216 and 217 are provided as shown in Figures 6 and 7 to limit the tilting of the rocking plates 216 and 217 in the valve opening direction to a predetermined angle, for example approximately 5°, to prevent any delay in response of the control valve 212.

In this embodiment, an air inlet 229 provided at the top of the valve chamber 213 is connected to a branch pipe 5 (not shown) for supplying air and the supply port 214 and exhaust port 215 are connected to air floats (not shown), respectively.

With this arrangement of the control valve 212, the positions of the pins 218 and 219 and the other geometrical configuration of the associated members are selected such that even under the conditions of the air supply and exhaust ports 214 and 215 being closed, the rocking plate 216 is appropriately tilted with its right hand end as viewed in Figure 6 closer than the left hand end to the bottom of the valve chamber and the rocking plate 217 is also appropriately tilted with its left hand end closer than the right hand end to the bottom of the valve chamber. When the bottom of the valve chamber is kept horizontally, the balls 223 and 224 thus assume their normal positions at the right hand end of the rocking plate 216 and the left hand end of the rocking plate 217 as shown in Figure 5.

Accordingly, when the control valve 212 is in the horizontal position, the air supply and exhaust ports 214 and 215 are always opened ready to start the air supplying or exhausting if required.

Moreover, when the control valve 212 is tilted in a clockwise direction as shown in Figure 6, both the balls 223 and 224 are positioned at the right hand ends of the rocking plates 216 and 217, with the result that the air supply port 214 positioned on the left side of the pin 218 is maintained opened but the air exhaust port 215 positioned on the right side of the pin 219 is closed by the elastic seal 222.

The rocking plate 217 for closing and opening the air exhaust port 215 is made larger than the rocking plate 216 for the air supply port 214, because the force exerted by the elastic seal 222 on the air exhaust port 215 to completely close it is higher than that exerted by the elastic seal 221 on the air supply port 214 owing to the larger diameter of the air exhaust port 215 than that of the air supply port 214 in order to obtain prompt submergence of the fish breeding tank.

When the control valve 212 is tilted in a counterclockwise direction as shown in Figure 7, the balls 223 and 224 roll towards the left hand ends of the rocking plates 216 and 217 to close the air supply port 214 but to open the air exhaust port 215.

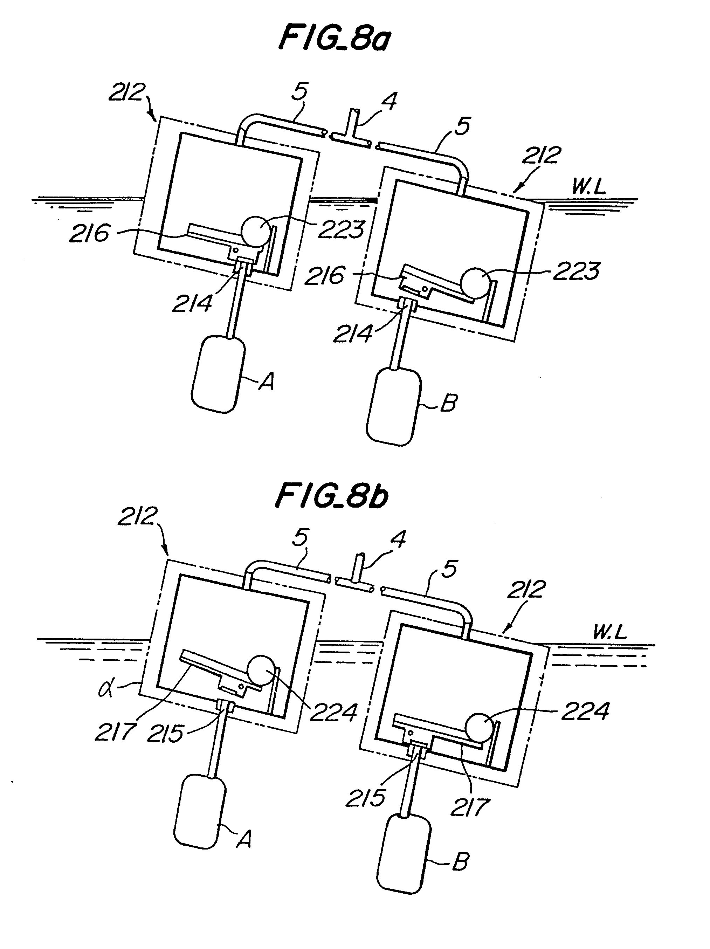

Two units respectively including the control valves 212 constructed as above described are connected in symmetry with respect to a main air pipe 4 as shown, for example, in Figure 8. The operation of the arrangement shown in Figure 8 will be explained hereinafter.

During the operation for supplying air from a working boat to the main air pipe 4 to float the fish breeding tank from its submerged or suspended position, if a frame (not shown) of the tank is tilted in the clockwise direction as viewed in Figures 8a and 8b for any reason, the rocking plates 216 close the air supply port 214 in the left hand control valve 212 and open the air supply port 214 in the right hand control valve 212 as shown in Figure 8a and the rocking plates 217 open the air exhaust port 215 in the left hand control valve 212 and close the air exhaust port 215 in the right hand control valve 215 as shown in Figure 8b. As a result, the air is continuously supplied through the right hand control valve 212 into the right hand air float B but is prevented from flowing into the left hand air float A through the left hand control valve 212, so that the inflation of the float B is promoted to increase its buoyancy, thereby restoring the fish breeding tank from the tilted position to the normal horizontal position.

On the contrary, during the operation for exhausting air from the air floats through the main air pipe 4 to submerge the fish breeding tank, if it is tilted as shown in Figures 8a and 8b, the air is continuously exhausted from the air float A, but the air is prevented from flowing out of the air float B by the closed exhaust port 215, so that the submergence of the fish breeding tank on the left hand control valve 212 is promoted to restore the tank from the tilted position to the normal horizontal position in the same manner as in the above tilting during floating.

In other words, as soon as a difference in water depth between the air floats A and B reaches a predetermined value, the supply or exhaust air is controlled so as to eliminate the difference to restore the tilting of the fish breeding tank during the floating or submerging operation or in floating position on the water surface.

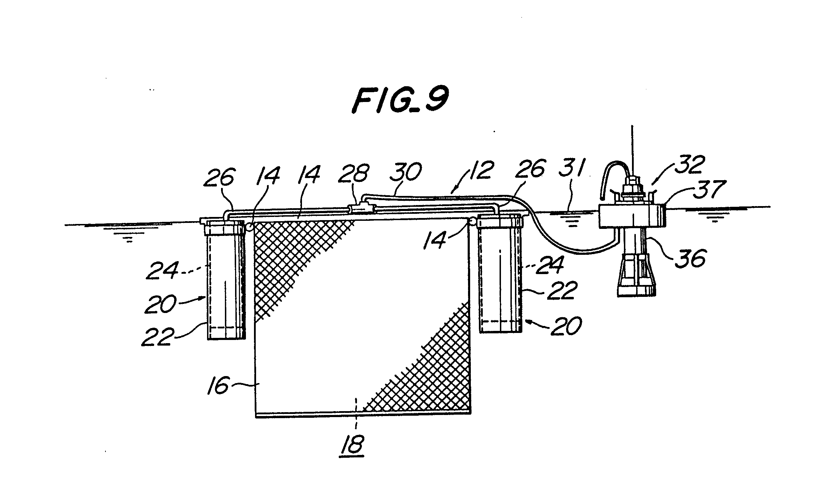

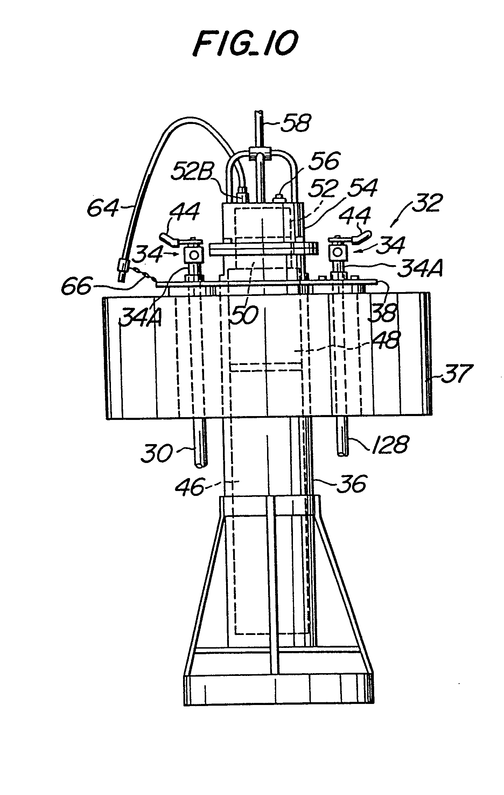

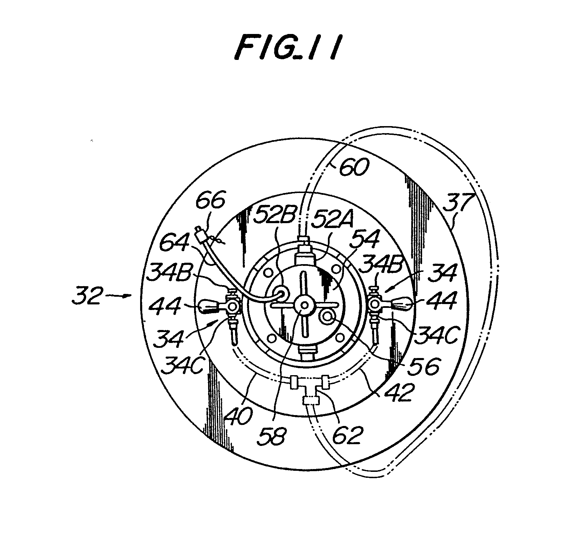

Figure 9 illustrates a further embodiment wherein an apparatus 32 shown in detail in Figures 10 and 11 is connected through a three-way valve 34 to a rubber hose, for example the hose 30 of the fish breeding tank as shown in Figure 2. The apparatus 32 comprises a bottom closed cylindrical body 36 having in the proximity of its upper end a pair of three-way valves 34 secured thereto through a bracket 38, and a floating annular body 37 at the intermediate portion of the cylindrical body 36 for keeping the apparatus floating at the water surface.

Each three-way valve 34 has three connecting ports 34A, 34B and 34C. The port 34A of one of the valves is connected to the rubber hose 30 of the fish breeding tank 12 shown in Figure 9. The port 34A of the other valve 34 is connected to a rubber hose 128 of another fish breeding tank (not shown). The port 34B is an air supply port which is connected to an air supply source or compressed air tank (not shown). The tank is usually arranged on a working boat or the like so as to be connected to the port 34B of the three-way valve 34. As an alternative, the tank may be mounted on the lower portion of the cylindrical body 36. To the port 34C is connected a rubber hose 40 or 42.

Each three-way valve 34 includes a lever 44 for selectively switching over the connection of the port 34A to the ports 34B and 34C.

The cylindrical body 36 includes therein an electric power source 46, a receiver 48, a motor 50 and an electrically-driven valve 52 located in succession from the bottom to the top of the cylindrical body 36, the upper end of which is closed by a cover 54. On the cover 54 is provided a power source switch 56 which, when actuated, connects the power source 46 to the receiver 48 and motor 50. An antenna 58 extends upwardly from the cover 54 and transmits signals from a transmitter (not shown) located in a remote place to the receiver 48 which energizes the motor 50 in response to the signals to connect connection ports 52A and 52B of the electrically-driven valve 52, which are normally closed, with each other (Figure 11).

To the connection port 52A of the electrically-driven valve 52 extending from the side of the cover 54 is connected a rubber hose 60 which communicates through a joint 62 with the rubber hoses 40 and 42, so that the connection port 52A communicates with the port 34C of each three-way valve 34. A rubber hose 64 is connected to the connection port 52B of the electrically-driven valve 52 extending from the top surface of the cover 54. The rubber hose 64 extends upwardly and is then bent so as to extend downwardly, its intermediate portion having a distal end secured to the bracket 38 by means of a chain 66.

With this arrangement, the air filled body 20 is maintained filled with air, even if the ports 34A and 34C of the three-way valve are connected with each other, so long as the electrically-driven valve 52 is closed. If the valve 52 is opened, the air filled in the air filled body 20 is exhausted through the three-way valve 34, rubber hoses 40 and 60, connection port 52B and rubber hose 64 into the atmosphere to sink or submerge the fish breeding tank into the water. Accordingly, the rubber hoses 40, 60 and 64 serve as exhaust pipes for the air filled bodies 20.

Furthermore, the cylindrical body 36 is provided at its lower end with a stabilizing support. Chains having anchors (not shown) extend from the four frame members 14 to anchor the fish breeding tank to the water bed for preventing it from drifting.

When the connecting ports 34A and 34B are connected with each other by operating a lever 44 of the three-way valve 34 to fill the flexible bags 22 with air, the fish breeding tank is floated up to the water surface ready to be used for breeding fish and shellfish. After filling the air filled bodies with air, the connecting ports 34A and 34C of the three-way valve 34 are maintained connected with each other. Under such a condition, the air does not escape from the flexible bags 24 because the electrically-driven valve 52 does not open until the motor 50 operates. When the weather is rough a transmitter in a remote place produces a wireless signal which reaches through the antenna 58 the receiver 48 which in turn feeds an amplified output to the motor 50 which is thus energized with the aid of the power source 46 to actuate the electrically-driven valve 52 so as to connect the connecting ports 52A and 52B with each other. As a result, the rubber hoses 26 of the flexible bags 24 communicate with the atmosphere through the three-way valve 34 and electrically-driven valve 52 to exhaust the air from the air filled bodies, so that the fish breeding tank 12 is promptly submerged to a depth where the fish breeding tank is protected from the rough weather.

The electrically-driven valve 52 is preferably constructed so as to be automatically closed after termination of the signal from the receiver. However, even if the valve 52 remains open, the water does not enter the electrically-driven valve 52 through the rubber hose 64 because its intermediate portion is arranged higher than its lower end.

After the weather becomes better, an operator may easily approach the apparatus 32 to connect the compressed air tank to the connecting port 34B of the three-way valve 34 and to switch over the lever 44, thereby inflating the flexible bags 24 to raise the fish breeding tank 12 to the surface of the water.

In this embodiment, the three-way valves may be able to automatically switch over by means of the electric motor 50. With this arrangement, the floating or raising operation of the tank 10 can be effected by remote control with the aid of the compressed air tank mounted on the apparatus 32.

As can be seen from the above description, the fish breeding tank apparatus according to the invention is provided with an air supply and exhaust system to eliminate any tendency for tilting of the tank, which a floating and sinking breeding tank is apt to undergo, to be promoted by difference in water depth between air floats, thereby promptly restoring the breeding tank into its horizontal position. Accordingly, the fish breeding tank can minimize or dispense with the intermediate underwater floats for maintaining the tank in its horizontal position and utilize the maximum floating capacity of the air floats correspondingly, thereby increasing the load to be supported by the tank to advantageously improve the working condition of the fish breeding tank. Moreover, in a preferred embodiment, the fish breeding tank apparatus according to the invention can promptly submerge the fish breeding tank by remote control by opening the respective valve with the aid of signals from a remote transmitter.

## C L A I M S :

1.      Apparatus for a fish breeding tank including a frame, a netted body held by the frame to form a space for receiving fish and the like to be bred, and a plurality of air floats attached to the tank and arranged to be supplied through air supply pipes with air for adjusting the buoyancy of the tank in water, characterized in that the apparatus comprises control means corresponding in number to the said air floats and arranged in passages for supplying the air to the air floats, each said control means comprising an air feeding branch passage for supplying air into the air float and an air exhausting branch passage for exhausting air from the air float, and valve means operable when the fish breeding tank is tilted more than a predetermined angle to close the said air feeding or exhausting branch passage depending upon whether it is required to decrease or increase buoyancy of the associated air float for restoring the tank to its normal position.

2.      Apparatus as claimed in Claim 1, characterized in that the said valve means comprises a valve chamber (120), a pair of valve openings(113,114) in the valve chamber on both sides of a vertical plane and respectively communicating with the said air exhausting and feeding branch passages(116,117) respectively including check valves(118,119), and balls(115) rolling to close the said valve openings when the tank is tilted to the said predetermined angle.

3.      Apparatus as claimed in Claim 1, characterized in that the said valve means comprises a valve chamber (213), a pair of valve openings(214,215) arranged on one side of a vertical plane(Y-Y) equally dividing the said valve chamber and spaced apart from each other in a direction parallel to the said vertical plane and respectively communicating with the said air feeding and exhausting branch passages, and rocking plates(216, 217) extending above the said valve openings in a direction substantially perpendicular to the said vertical plane and closing and opening the associated valve openings, and balls(223,224) respectively located on the said rocking plates such that when said tank is tilted more than the said predetermined angle the said balls roll to cause rocking movements of the said plates, thereby controlling the buoyancy of the associated air float.

4. Apparatus as claimed in Claim 3, characterized in that pivotal shafts(218,219) for the said rocking plates are arranged on opposite sides of a line connecting the said valve openings.

5. Apparatus as claimed in Claim 3 or 4, characterized by stops(225,226) extending from a valve body(220) forming the said valve chamber to limit movements of the said balls in longitudinal and transverse directions of the said rocking plates.

6. Apparatus as claimed in any of Claims 3 to 5, characterized by stops(227,228) for the said rocking plates to limit the rocking movements of the rocking plates in the valve opening direction to predetermined angles, thereby preventing any delay in closing the said valve openings.

7. Apparatus as claimed in Claim 1, characterized by a three-way valve(34) for selectively connecting the said air floats with an air exhaust pipe(60,64), a valve(52) provided in the said air exhaust pipe, drive means(50) for opening the said valve, and a receiver(48) for energizing the said drive means upon receipt of a signal from a transmitter, whereby the fish breeding tank may be remotely controlled.

8.     Apparatus as claimed in Claim 7, characterized in that a plurality of said three-way valves are provided to enable a plurality of fish breeding tanks to be operated.

0076151

1/10

FIG_1
PRIOR ART

# FIG. 2
## PRIOR ART

## FIG_3

## FIG_4a

# FIG. 4b

0076151

## FIG.5

## FIG.6

## FIG_7

## FIG_8a

## FIG.8b

# FIG.9

# FIG.10

10/10

FIG.11